# EUROPEAN PATENT APPLICATION

(11) **EP 4 472 303 A1**
(43) Date of publication of application: **04.12.2024**
(21) Application number: 22928444.3
(22) Date of filing: 23.12.2022
(51) Int. Cl.: H04W 60/00, H04W 4/80, H04W 48/16, H04L 67/12

(54) **COMMUNICATION METHOD AND APPARATUS**

(30) Priority: 28.02.2022 CN 202210188528
(71) Applicant: Huawei Technologies Co., Ltd., Shenzhen, Guangdong 518129 (CN)
(72) Inventor: HUANG, Kang, Shenzhen, Guangdong 518129 (CN); ZHU, Hualin, Shenzhen, Guangdong 518129 (CN); XU, Yishan, Shenzhen, Guangdong 518129 (CN)
(74) Representative: Gill Jennings & Every LLP
(86) International application number: PCT/CN2022/141621
(87) International publication number: WO 2023/160201

(57) **Abstract**

This application provides a communication method and an apparatus, to reduce signaling overheads in a registration process of a terminal device. The method includes: receiving a registration request from a read/write device, sending a transmission request to an application network element, and notifying the read/write device of a registration success. The registration request includes identification information of the terminal device, the registration request is used to request to register the identification information with a network, the transmission request includes the identification information, and the transmission request is used to request to transmit the identification information to the application network element.

## Description

This application claims priority to Chinese Patent Application No. 202210188528.0, filed with the China National Intellectual Property Administration on February 28, 2022 and entitled "COMMUNICATION METHOD AND APPARATUS", which is incorporated herein by reference in its entirety.

### TECHNICAL FIELD

This application relates to the communication field, and in particular, to a communication method and an apparatus.

### BACKGROUND

An existing registration procedure of a terminal device is very complex. Specifically, after the terminal device requests registration, devices including the terminal device, an access network device, an access and mobility management function (access and mobility management function, AMF) network element, an authentication server function (authentication server function, AUSF) network element, and a unified data management (unified data management, UDM) network element need to interact with each other, to complete the registration of the terminal device. In this case, dozens of pieces of signaling need to be transmitted for a complete registration procedure.

For widely used terminal devices or the like, if the existing registration procedure of the terminal device is applied, signaling overheads are extremely high. Therefore, how to reduce signaling overheads in a registration process of the terminal device becomes an urgent problem to be resolved.

### SUMMARY

Embodiments of this application provide a communication method and an apparatus, to reduce signaling overheads in a registration process of a terminal device.

To achieve the foregoing objective, this application uses the following technical solutions.

According to a first aspect, a communication method is provided. The communication method includes: A tag management network element receives a registration request from a read/write device; the tag management network element sends a transmission request to an application network element; and the tag management network element notifies the read/write device of a registration success. The registration request includes identification information of a terminal device, and the registration request is used to request to register the identification information with a network. The transmission request includes the identification information, and the transmission request is used to request to transmit the identification information to the application network element.

According to the communication method provided in the first aspect, the tag management network element receives the registration request used to request to register the identification information with the network, sends the transmission request to the application network element, to request to transmit the identification information to the application network element, and notifies the read/write device of the registration success. In this way, registration of the terminal device can be implemented via a relatively few signaling interactions between core network elements, to reduce signaling overheads in a registration process of the terminal device.

In a possible design manner, that the tag management network element notifies the read/write device of a registration success may include: in the case that a behavior statistics quantity of the terminal device is less than a behavior threshold and/or a transmission success response is received from the application network element, notifying the read/write device of the registration success, where the transmission success response indicates that the transmission request is successfully received, and the behavior statistics quantity is determined based on the identification information. In this way, the registration success may be determined based on the transmission success response, and/or the registration success may be determined after the tag management network element manages the terminal device.

Optionally, the behavior statistics quantity may include a statistics quantity of behaviors or actions related to the terminal device.

Optionally, the behavior threshold may include a threshold of a quantity of behaviors or actions related to the terminal device.

In a possible design manner, that the tag management network element receives a transmission success response from the application network element may include: The tag management network element receives the transmission success response in the case that a registration timer does not expire. The registration timer is a timer started when the tag management network element sends the transmission request.

In this way, the registration timer is configured on the tag management network element, so that the registration of the terminal device can be managed more efficiently, uncertainty of a status of the terminal device caused by loss of a transmission response can be reduced, and the terminal device can be managed more accurately.

In a possible design manner, the transmission success response may include the identification information of the terminal device and/or an identifier of an enterprise to which the terminal device belongs.

In this way, the tag management network element may obtain, based on the identification information of the terminal device, the terminal device corresponding to the transmission response, manage the terminal device, and identify and collect statistics on, based on the identifier of the enterprise to which the terminal device belongs, information about the enterprise corresponding to the terminal device.

In a possible design manner, that the tag management network element sends a transmission request to an application network element may include: In the case that the behavior statistics quantity of the terminal device is less than the behavior threshold, the tag management network element sends the transmission request to the application network element. The behavior statistics quantity is determined by the tag management network element based on the identification information.

In this way, when the behavior statistics quantity is less than the behavior threshold, the tag management network element sends the transmission request to the application network element, and continues to perform a registration operation and the like (including, for example, data transmission). Otherwise, the tag management network element does not send the transmission request, and suspends the registration operation or the like, so that the terminal device can be effectively managed and charged.

In a possible design manner, the behavior statistics quantity may include one or more of the following: an owner enterprise registration quantity, a quantity of transmissions of signaling carrying the identification information, a quantity of times that the terminal device requests registration, a quantity of times that the terminal device succeeds in registration, a quantity of times that the terminal device requests data transmission, and a quantity of times that the terminal device succeeds in data transmission. The owner enterprise registration quantity is a quantity of terminal devices that belong to the enterprise corresponding to the terminal device and that register with the network.

In a possible design manner, the behavior threshold may include one or more of the following: an owner enterprise registration threshold, a tag signaling interaction threshold, a threshold of the quantity of times that the terminal device requests registration, a threshold of the quantity of times that the terminal device succeeds in registration, a threshold of the quantity of times that the terminal device requests data transmission, and a threshold of the quantity of times that the terminal device succeeds in data transmission.

In a possible design manner, the registration request may further include data and/or authentication information, and the authentication information may include information for authenticating the terminal device and/or information used by the terminal device to perform authentication.

In this way, the terminal device includes the data in the registration request, so that the data can be transmitted in the registration process, signaling interactions between core network elements can be reduced, and a session establishment procedure can be simplified, to reduce a data transmission delay and improve a data transmission rate. The registration request may be used to request to authenticate the terminal device and/or authenticate the network by the terminal device, so that security can be improved.

In a possible design manner, the transmission request may further include the data and/or the authentication information.

In this way, a session establishment procedure can be simplified, a data transmission rate can be increased, and security can be improved.

According to a second aspect, a communication method is provided. The communication method includes: A tag management network element receives a registration request from a read/write device, and notifies the read/write device of a registration failure when a behavior statistics quantity of a terminal device is greater than or equal to a behavior threshold, a registration timer expires, and/or a transmission failure response is received from an application network element. The registration request includes identification information of the terminal device, and the registration request is used to request to register the identification information with a network. The transmission failure response indicates that a transmission request is not successfully received, the transmission request includes the identification information, and the transmission request is used to request to transmit the identification information to the application network element. Optionally, the transmission request is sent by the tag management network element to the application network element.

According to the communication method provided in the second aspect, the tag management network element receives the registration request used to request to register the identification information with the network, and notifies the read/write device of the registration failure when a registration failure trigger condition is met. In this way, registration of the terminal device can be implemented via a relatively few signaling interactions between core network elements, to reduce signaling overheads in a registration process of the terminal device. In addition, the registration timer is configured on the tag management network element, so that a registration status of the terminal device can be notified in time, and uncertainty of a status of the terminal device caused by loss of a transmission response can be reduced.

In a possible design manner, that the tag management network element receives a transmission failure response from an application network element may include: The tag management network element receives the transmission failure response from the application network element when the registration timer does not expire.

In a possible design manner, the transmission failure response may include the identification information of the terminal device and/or an identifier of an enterprise to which the terminal device belongs.

In a possible design manner, the registration timer may be a timer started when the tag management network element sends the transmission request.

In a possible design manner, the behavior statistics quantity may be determined by the tag management network element based on the identification information.

In a possible design manner, the behavior statistics quantity may include one or more of the following: an owner enterprise registration quantity, a quantity of transmissions of signaling carrying the identification information, a quantity of times that the terminal device requests registration, a quantity of times that the terminal device succeeds in registration, a quantity of times that the terminal device requests data transmission, and a quantity of times that the terminal device succeeds in data transmission. The owner enterprise registration quantity is a quantity of terminal devices that belong to the enterprise corresponding to the terminal device and that register with the network.

In a possible design manner, the behavior threshold may include one or more of the following: an owner enterprise registration threshold, a tag signaling interaction threshold, a threshold of the quantity of times that the terminal device requests registration, a threshold of the quantity of times that the terminal device succeeds in registration, a threshold of the quantity of times that the terminal device requests data transmission, and a threshold of the quantity of times that the terminal device succeeds in data transmission.

In a possible design manner, the registration request may further include data and/or authentication information, and the authentication information may include information for authenticating the terminal device and/or information used by the terminal device to perform authentication.

In a possible design manner, the transmission request may further include the data and/or the authentication information.

In addition, for technical effects of the communication method in the second aspect, refer to the technical effects of the communication method in any possible implementation of the first aspect. Details are not described herein again.

According to a third aspect, a communication method is provided. The communication method includes: An application network element receives a transmission request from a tag management network element; the application network element processes the transmission request; and the application network element sends a transmission success response to the tag management network element. The transmission request includes identification information of the terminal device. The transmission success response indicates that the transmission request is successfully received.

In a possible design manner, the transmission request may further include data and/or authentication information, and the authentication information may include information for authenticating the terminal device and/or information used by the terminal device to perform authentication.

In a possible design manner, that the application network element processes the transmission request may include: The application network element records the data and/or the identification information; and/or the application network element authenticates the terminal device by using the authentication information.

In a possible design manner, the transmission success response may include the identification information of the terminal device and/or an identifier of an enterprise to which the terminal device belongs.

In addition, for technical effects of the communication method in the third aspect, refer to the technical effects of the communication method in any possible implementation of the first aspect or the second aspect. Details are not described herein again.

According to a fourth aspect, a communication method is provided. The communication method includes: A terminal device sends a terminal registration request to a read/write device, and the terminal device receives a registration success response or a registration failure response from the read/write device. The terminal registration request includes identification information of the terminal device, and the terminal registration request is used to request to register the identification information with a network. The registration success response indicates that registration succeeds, and the registration failure response indicates that registration fails.

In a possible design manner, the terminal registration request may further include data and/or authentication information, and the authentication information may include information for authenticating the terminal device and/or information used by the terminal device to perform authentication.

In a possible design manner, that the terminal device sends a terminal registration request to a read/write device may include: After the terminal device establishes a communication connection to the read/write device, the terminal device sends the terminal registration request to the read/write device.

In addition, for technical effects of the communication method in the fourth aspect, refer to the technical effects of the communication method in any possible implementation of the first aspect or the second aspect. Details are not described herein again.

According to a fifth aspect, a communication apparatus is provided. The communication apparatus includes a receiving module and a sending module.

The receiving module is configured to receive a registration request from a read/write device. The sending module is configured to send a transmission request to an application network element. The sending module is further configured to notify the read/write device of a registration success. The registration request includes identification information of a terminal device, and the registration request is used to request to register the identification information with a network. The transmission request includes the identification information, and the transmission request is used to request to transmit the identification information to the application network element.

In a possible design manner, the sending module is further configured to: in the case that a behavior statistics quantity of the terminal device is less than a behavior threshold and/or a transmission success response is received from the application network element, notify the read/write device of the registration success. The transmission success response indicates that the transmission request is successfully received, and the behavior statistics quantity is determined by the communication apparatus based on the identification information.

In a possible design manner, that the communication apparatus receives a transmission success response from the application network element may include: The communication apparatus receives the transmission success response in the case that a registration timer does not expire. The registration timer is a timer started when the communication apparatus sends the transmission request.

In a possible design manner, the transmission success response may include the identification information of the terminal device and/or an identifier of an enterprise to which the terminal device belongs.

In a possible design manner, the sending module is further configured to send the transmission request to the application network element in the case that the behavior statistics quantity of the terminal device is less than the behavior threshold. The behavior statistics quantity is determined by the communication apparatus based on the identification information.

In a possible design manner, the behavior statistics quantity may include one or more of the following: an owner enterprise registration quantity, a quantity of transmissions of signaling carrying the identification information, a quantity of times that the terminal device requests registration, a quantity of times that the terminal device succeeds in registration, a quantity of times that the terminal device requests data transmission, and a quantity of times that the terminal device succeeds in data transmission. The owner enterprise registration quantity is a quantity of terminal devices that belong to the enterprise corresponding to the terminal device and that register with the network.

In a possible design manner, the behavior threshold may include one or more of the following: an owner enterprise registration threshold, a tag signaling interaction threshold, a threshold of the quantity of times that the terminal device requests registration, a threshold of the quantity of times that the terminal device succeeds in registration, a threshold of the quantity of times that the terminal device requests data transmission, and a threshold of the quantity of times that the terminal device succeeds in data transmission.

In a possible design manner, the registration request may further include data and/or authentication information, and the authentication information includes information for authenticating the terminal device and/or information used by the terminal device to perform authentication.

In a possible design manner, the transmission request may further include the data and/or the authentication information.

It should be noted that the receiving module and the sending module may be separately disposed, or may be integrated into one module, namely, a transceiver module. Specific implementations of the receiving module and the sending module are not specifically limited in this application.

Optionally, the communication apparatus in the fifth aspect may further include a processing module and a storage module. The storage module stores a program or instructions. When the processing module executes the program or the instructions, the communication apparatus in the fifth aspect can perform the method in the first aspect.

It should be noted that the communication apparatus in the fifth aspect may be a tag management network element, or may be a chip (system) or another part or component that may be disposed in the tag management network element. This is not limited in this application.

In addition, for technical effects of the communication apparatus in the fifth aspect, refer to the technical effects of the communication method in any possible implementation of the first aspect. Details are not described herein again.

According to a sixth aspect, a communication apparatus is provided. The communication apparatus includes a receiving module and a sending module.

The receiving module is configured to receive a registration request from a read/write device. The sending module is further configured to: when a behavior statistics quantity of a terminal device is greater than or equal to a behavior threshold, a registration timer expires, and/or a transmission failure response is received from an application network element, notify the read/write device of a registration failure. The registration request includes identification information of the terminal device, and the registration request is used to request to register the identification information with a network. The transmission failure response indicates that a transmission request is not successfully received, the transmission request includes the identification information, and the transmission request is used to request to transmit the identification information to the application network element. Optionally, the transmission request is sent by the communication apparatus to the application network element.

In a possible design manner, that the communication apparatus receives a transmission failure response from an application network element may include: The communication apparatus receives the transmission failure response from the application network element when the registration timer does not expire.

In a possible design manner, the transmission failure response may include the identification information of the terminal device and/or an identifier of an enterprise to which the terminal device belongs.

In a possible design manner, the registration timer may be a timer started when a tag management network element sends the transmission request.

In a possible design manner, the behavior statistics quantity may be determined by the tag management network element based on the identification information.

In a possible design manner, the behavior statistics quantity may include one or more of the following: an owner enterprise registration quantity, a quantity of transmissions of signaling carrying the identification information, a quantity of times that the terminal device requests registration, a quantity of times that the terminal device succeeds in registration, a quantity of times that the terminal device requests data transmission, and a quantity of times that the terminal device succeeds in data transmission. The owner enterprise registration quantity is a quantity of terminal devices that belong to the enterprise corresponding to the terminal device and that register with the network.

In a possible design manner, the behavior threshold may include one or more of the following: an owner enterprise registration threshold, a tag signaling interaction threshold, a threshold of the quantity of times that the terminal device requests registration, a threshold of the quantity of times that the terminal device succeeds in registration, a threshold of the quantity of times that the terminal device requests data transmission, and a threshold of the quantity of times that the terminal device succeeds in data transmission.

In a possible design manner, the registration request may further include data and/or authentication information, and the authentication information may include information for authenticating the terminal device and/or information used by the terminal device to perform authentication.

In a possible design manner, the transmission request may further include the data and/or the authentication information.

It should be noted that the receiving module and the sending module may be separately disposed, or may be integrated into one module, namely, a transceiver module. Specific implementations of the receiving module and the sending module are not specifically limited in this application.

Optionally, the communication apparatus in the sixth aspect may further include a processing module and a storage module. The storage module stores a program or instructions. When the processing module executes the program or the instructions, the communication apparatus in the sixth aspect can perform the method in the second aspect.

It should be noted that the communication apparatus in the sixth aspect may be the tag management network element, or may be a chip (system) or another part or component that may be disposed in the tag management network element. This is not limited in this application.

In addition, for technical effects of the communication apparatus in the sixth aspect, refer to the technical effects of the communication method in any possible implementation of the second aspect. Details are not described herein again.

According to a seventh aspect, a communication apparatus is provided. The communication apparatus includes a receiving module, a sending module, and a processing module.

The receiving module is configured to receive a transmission request from a tag management network element. The processing module is configured to process the transmission request. The sending module is configured to send a transmission success response to the tag management network element. The transmission request includes identification information of a terminal device. The transmission success response indicates that the transmission request is successfully received.

In a possible design manner, the transmission request may further include data and/or authentication information, and the authentication information may include information for authenticating the terminal device and/or information used by the terminal device to perform authentication.

In a possible design manner, the processing module is further configured to record the data and/or the identification information; and/or the processing module is further configured to authenticate the terminal device by using the authentication information.

In a possible design manner, the transmission success response may include the identification information of the terminal device and/or an identifier of the communication apparatus.

It should be noted that the receiving module and the sending module may be separately disposed, or may be integrated into one module, namely, a transceiver module. Specific implementations of the receiving module and the sending module are not specifically limited in this application.

Optionally, the communication apparatus in the seventh aspect may further include a storage module, and the storage module stores a program or instructions. When the processing module executes the program or the instructions, the communication apparatus in the seventh aspect can perform the method in the third aspect.

It should be noted that the communication apparatus in the seventh aspect may be an application network element, or may be a chip (system) or another part or component that may be disposed in the application network element. This is not limited in this application.

In addition, for technical effects of the communication apparatus in the seventh aspect, refer to the technical effects of the communication method in any possible implementation of the third aspect. Details are not described herein again.

According to an eighth aspect, a communication apparatus is provided. The communication apparatus includes a receiving module and a sending module. The sending module is configured to send a terminal registration request to a read/write device. The receiving module is configured to receive a registration success response or a registration failure response from the read/write device. The terminal registration request includes identification information of the communication apparatus, and the terminal registration request is used to request to register the identification information with a network. The registration success response indicates that registration succeeds, and the registration failure response indicates that registration fails.

In a possible design manner, the terminal registration request may further include data and/or authentication information, and the authentication information may include information for authenticating a terminal device and/or information used by the terminal device to perform authentication.

In a possible design manner, the sending module is further configured to send the terminal registration request to the read/write device after the communication apparatus establishes a communication connection to the read/write device.

It should be noted that the receiving module and the sending module may be separately disposed, or may be integrated into one module, namely, a transceiver module. Specific implementations of the receiving module and the sending module are not specifically limited in this application.

Optionally, the communication apparatus in the eighth aspect may further include a processing module and a storage module. The storage module stores a program or instructions. When the processing module executes the program or the instructions, the communication apparatus in the eighth aspect can perform the method in the fourth aspect.

It should be noted that the communication apparatus in the eighth aspect may be the terminal device, or may be a chip (system) or another part or component that may be disposed in the terminal device. This is not limited in this application.

In addition, for technical effects of the communication apparatus in the eighth aspect, refer to the technical effects of the communication method in any possible implementation of the fourth aspect. Details are not described herein again.

According to a ninth aspect, a communication apparatus is provided. The communication apparatus includes a processor. The processor is coupled to a memory, and the memory is configured to store a computer program.

The processor is configured to execute the computer program stored in the memory, so that the communication method in any possible implementation of the first aspect to the fourth aspect is performed.

In a possible design, the communication apparatus in the ninth aspect may further include a transceiver. The transceiver may be a transceiver circuit or an input/output port. The transceiver may be used by the communication apparatus to communicate with another device.

It should be noted that, the input port may be configured to implement a receiving function in the first aspect to the fourth aspect, and the output port may be configured to implement a sending function in the first aspect to the fourth aspect.

In this application, the communication apparatus in the ninth aspect may be a tag management network element, an application network element, a terminal device, or a chip or a chip system disposed in the tag management network element, the application network element, or the terminal device.

In addition, for technical effects of the communication apparatus in the ninth aspect, refer to the technical effects of the communication method in any possible implementation of the first aspect to the fourth aspect. Details are not described herein again.

According to a tenth aspect, a communication system is provided. The communication system includes the communication apparatus in the fifth aspect and the communication apparatus in the seventh aspect; or the communication system includes the communication apparatus in the sixth aspect and the communication apparatus in the seventh aspect. Optionally, the communication system may further include the communication apparatus in the eighth aspect.

Alternatively, the communication system includes the communication apparatus in the fifth aspect and configured to implement the method in the first aspect and the communication apparatus in the seventh aspect and configured to implement the method in the third aspect; or the communication system includes the communication apparatus in the sixth aspect and configured to implement the method in the second aspect and the communication apparatus in the seventh aspect and configured to implement the method in the third aspect. Optionally, the communication system may further include the communication apparatus in the eighth aspect and configured to implement the method in the fourth aspect.

According to an eleventh aspect, a chip system is provided. The chip system includes a logic circuit and an input/output port. The logic circuit is configured to implement a processing function in the first aspect to the fourth aspect, and the input/output port is configured to implement receiving and sending functions in the first aspect to the fourth aspect. Specifically, the input port may be configured to implement the receiving function in the first aspect to the fourth aspect, and the output port may be configured to implement the sending function in the first aspect to the fourth aspect.

In a possible design, the chip system further includes a memory, and the memory is configured to store program instructions and data for implementing functions in the first aspect to the fourth aspect.

The chip system may include a chip, or may include a chip and another discrete component.

According to a twelfth aspect, a computer-readable storage medium is provided. The computer-readable storage medium stores a computer program or instructions. When the computer program or the instructions are run on a computer, the communication method in any possible implementation of the first aspect to the fourth aspect is performed.

According to a thirteenth aspect, a computer program product is provided. The computer program product includes a computer program or instructions. When the computer program or the instructions are run on a computer, the communication method in any possible implementation of the first aspect to the fourth aspect is performed.

### BRIEF DESCRIPTION OF DRAWINGS

FIG. 1 is a diagram of an architecture of a communication system according to an embodiment of this application;
FIG. 2 is a schematic of a network architecture according to an embodiment of this application;
FIG. 3 is a schematic flowchart of a communication method according to an embodiment of this application;
FIG. 4 is a schematic flowchart of another communication method according to an embodiment of this application;
FIG. 5 is a diagram of a structure of a communication apparatus according to an embodiment of this application; and
FIG. 6 is a diagram of a structure of another communication apparatus according to an embodiment of this application.

### DESCRIPTION OF EMBODIMENTS

The following describes technical solutions in this application with reference to accompanying drawings.

The technical solutions in embodiments of this application may be applied to various communication systems, for example, a universal mobile telecommunications system (universal mobile telecommunications system, UMTS), a wireless local area network (wireless local area network, WLAN), a wireless fidelity (wireless fidelity, Wi-Fi) system, a wired network, a vehicle to everything (vehicle to everything, V2X) communication system, a device-to-device (device-to-device, D2D) communication system, an internet of vehicles communication system, a 4th generation (4th generation, 4G) mobile communication system such as a long term evolution (long term evolution, LTE) system or a worldwide interoperability for microwave access (worldwide interoperability for microwave access, WiMAX) communication system, a 5th generation (5th generation, 5G) mobile communication system such as a new radio (new radio, NR) system, and a future communication system such as a 6th generation (6th generation, 6G) mobile communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, words such as "example" and "for example" are used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner.

In embodiments of this application, sometimes "of (of)", "corresponding (corresponding, relevant)", and "corresponding (corresponding)" may be mixed. It should be noted that when differences are not emphasized, the meaning to be expressed is consistent.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

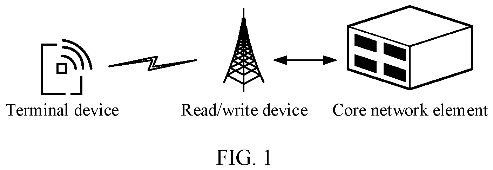

For ease of understanding of embodiments of this application, a communication system shown in FIG. 1 is first used as an example to describe in detail a communication system applicable to embodiments of this application. For example, FIG. 1 is a diagram of an architecture of a communication system to which a communication method according to an embodiment of this application is applicable.

As shown in FIG. 1, the communication system includes a core network element. There may be one or more core network elements. Optionally, the communication system may further include a read/write device and/or a terminal device.

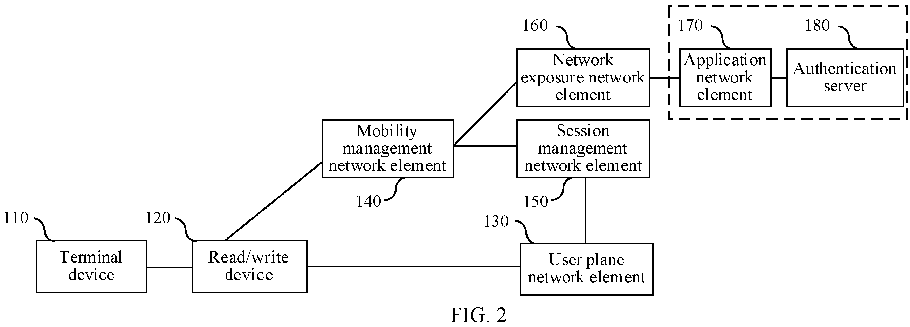

The core network element is a device that is located on a network side of the communication system and that provides a network service for the terminal device, or a chip (system) or another part or component that may be disposed in the device. The core network element may include but is not limited to a tag management network element and/or an application network element. The tag management network element may be a mobility management network element or another network element having a tag management function. It should be noted that for specific descriptions of the mobility management network element and the application network element, refer to the following corresponding descriptions shown in FIG. 2. Details are not described herein again.

The read/write device may be a device having a reading/writing function. The read/write device may perform non-contact bidirectional data communication in a wireless radio frequency manner, and perform reading/writing on the terminal device in the wireless radio frequency manner. The read/write device may be a reader (reader) or an access network device. For example, when the read/write device is a reader, the communication system may further include an access network device, and the terminal device may communicate with the access network device via the reader. Alternatively, when the read/write device is an access network device, the terminal device may directly communicate with the access network device. The reader may be referred to as a tag reader, a reading apparatus, a scanner, a reader head, a communicator, a card reader, or the like. The reader may be a handheld or fixed device that reads (and sometimes may write) identification information of the terminal device, or may be a device that communicates with the terminal device.

For example, the access network device in embodiments of this application may be any communication device that has a wireless transceiver function and that is configured to communicate with the terminal device. The access network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (home evolved NodeB, HeNB, or home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like. Alternatively, the access network device may be a gNB or a transmission point (TRP or TP) in a 5G system such as an NR system, or one antenna panel or a group of antenna panels (including a plurality of antenna panels) of a base station in the 5G system, or may be a network node, for example, a baseband unit (BBU) or a distributed unit (distributed unit, DU), that constitutes a gNB or a transmission point.

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is generated by the CU, and is finally encapsulated at the PHY layer of the DU into information at the PHY layer, or is converted from information at the PHY layer. Therefore, in this architecture, higher layer signaling, for example, RRC layer signaling, may also be considered to be sent by the DU, or sent by the DU and the AAU. It may be understood that the access network device may be a device including one or more of a CU node, a DU node, or an AAU node. In addition, the CU may be classified as an access network device in an access network (radio access network, RAN), or the CU may be classified as an access network device in a core network (core network, CN). This is not limited in this application.

The terminal device is a device that accesses the communication system and is passive or semi-passive (for example, stores electric energy by using solar energy). The terminal device may not be equipped with or mainly depend on a power supply device such as a battery, but obtains energy from an environment. The terminal device may be an electronic tag, a smart tag, a tag device, a radio frequency card, an RFID tag, an RFID transponder, an RFID data carrier, a passive or semi-passive terminal device, or the like. For example, the passive or semi-passive terminal device may be an express delivery terminal (for example, a device that can monitor a location of a cargo vehicle, or a device that can monitor a temperature and humidity of cargo) in smart logistics, a wireless terminal (for example, a wearable device that can collect related data of poultry and livestock) in smart agriculture, a wireless terminal (for example, a smart elevator, a fire monitoring device, or a smart meter) in smart architecture, a wireless terminal (for example, a wearable device that can monitor a physiological status of a person or an animal) in smart healthcare, a wireless terminal (for example, a smart bus, a smart vehicle, a shared bicycle, a charging pile monitoring device, a smart traffic light, a smart monitoring device, or a smart parking device) in smart transportation, or a wireless terminal (for example, a vending machine, a self-service checkout machine, or an unmanned convenience store) in smart retail. It should be noted that the terminal device may be referred to as an internet of things device, an internet of things device, an internet of things (internet of things, IoT) terminal device, or the like. This is not limited in this application.

The communication system provided in this application may be applied to fields such as logistics, transportation, identity identification, anti-counterfeiting, asset management, food, information statistics, transaction, application query, or security control. For example, the communication system is applied to book management, logistics management, water, electricity, and gas charging, access control management, shelf management, or industrial production line management. A specific application scenario is not limited in this application.

It should be noted that the communication method provided in embodiments of this application is applicable to the communication system shown in FIG. 1. For specific implementation, refer to the following method embodiments. Details are not described herein again.

It should be noted that, the solutions in embodiments of this application may be further applied to another communication system, and a corresponding name may alternatively be replaced with a name of a corresponding function in the another communication system.

It should be understood that FIG. 1 is merely a simplified diagram of an example for ease of understanding. The communication system may further include another network device and/or another terminal device, which are/is not drawn in FIG. 1.

Optionally, the communication system shown in FIG. 1 is applicable to a communication network currently being discussed, or is applicable to another future network or the like. This is not specifically limited in embodiments of this application.

For example, FIG. 2 is a schematic of a network architecture according to an embodiment of this application.

The communication system shown in FIG. 1 is applicable to the network architecture shown in FIG. 2. As shown in FIG. 2, the network architecture may include a terminal device 110, a read/write device 120, a user plane network element 130, a mobility management network element 140, a session management network element 150, a network exposure network element 160, an application network element 170, an authentication server 180, and the like. The following separately describes the network elements in the network architecture.
1. For an implementation of the terminal device 110, refer to descriptions of the terminal device in FIG. 1. Details are not described herein again.
2. For an implementation of the read/write device 120, refer to descriptions of the read/write device in FIG. 1. Details are not described herein again.
3. The user plane network element 130 serves as an interface to a data network, and can complete functions such as user plane data forwarding, session-based/flow level-based charging statistics, and bandwidth limitation, that is, packet routing and forwarding, quality of service (quality of service, QoS) handling for user plane data, and the like.
   In the 5G communication system, the user plane network element may be a user plane function (user plane function, UPF) network element.
4. The mobility management network element 140 is mainly configured to perform mobility management, access management, and the like. In the 5G communication system, the access management network element may be an access and mobility management function AMF network element, and mainly implements mobility management, access authentication/authorization, and other functions.
5. The session management network element 150 is mainly configured to: perform session management (for example, creation or deletion), maintain a session context and user plane forwarding pipeline information, allocate and manage an internet protocol (internet protocol, IP) address of user equipment, select an endpoint that can manage a user plane function interface and a policy control and charging function interface, perform downlink data notification, and the like.
   In the 5G communication system, the session management network element may be a session management function (session management function, SMF) network element, and implements IP address allocation for a terminal, UPF selection, charging, QoS policy control, and the like.
6. The network exposure network element 160 may be configured to provide a framework, authentication, and an interface that are related to network capability exposure, and transfer information between a 5G system network function and another network function. In the 5G communication system, the network exposure network element may be a network exposure function (network exposure function, NEF) network element, and is mainly configured to expose a service and a capability of a 3GPP network function to an application function (application function, AF) network element, and may also enable the AF to provide information for the 3GPP network function.
7. The application network element 170 may be configured to provide various business services, can interact with a core network through the network exposure function (network exposure function, NEF) network element, and can interact with a policy management framework to perform policy management. In the 5G communication system, the application network element may be an AF network element, represents an application function of a third party or an operator, is an interface for obtaining external application data in a 5G network, and is mainly configured to transfer a requirement of an application side for a network side.
8. The authentication server 180 may be configured to: process an access request of the terminal device, provide authentication, authorization, and account services, manage user access to a network server, and provide a service for the terminal device having an access right. The authentication server may be an authentication, authorization, and accounting (authentication, authorization, and accounting, AAA) server.

It may be understood that the foregoing network elements or functions may be network elements in a hardware device, software functions running on dedicated hardware, or virtualized functions instantiated on a platform (for example, a cloud platform). The foregoing network element or function may be implemented by one device, or may be jointly implemented by a plurality of devices, or may be a functional module in one device. This is not specifically limited in embodiments of this application.

It should be understood that the architecture shown in FIG. 2 may further include another network element or device, which is not drawn in FIG. 2.

An existing registration procedure of the terminal device is very complex. When the terminal device performs registration by using the existing registration procedure of the terminal device, signaling overheads are extremely high, and inventory efficiency is affected. In addition, a large amount of signaling transmission may affect signaling interaction of common terminal devices, and affect user experience.

In addition, an existing session establishment procedure of the terminal device is very complex. For example, after the terminal device requests to establish a session, devices such as the terminal device, an access network device, an AMF network element, a UPF network element, an SMF network element, a policy control function (policy control function, PCF) network element, and a UDM network element need to interact with each other to complete registration of the terminal device. As a result, dozens of pieces of signaling need to be transmitted to complete a complete session establishment procedure. In addition, the terminal device can start to transmit data only after the session is established. If the terminal device establishes the session by using the existing session establishment procedure and then transmits data, signaling overheads of data transmission of the terminal device are extremely high, and congestion is easily caused, resulting in an excessively high transmission delay. Therefore, the existing session establishment procedure needs to be simplified, to facilitate large-scale application of terminal devices and reduce the data transmission delay.

According to the communication method provided in embodiments of this application, a tag management network element receives a registration request used to request to register identification information with a network; sends a transmission request to an application network element, to request to transmit the identification information to the application network element; and feeds back a registration response to a read/write device. The registration response may indicate that registration succeeds or registration fails. In this way, registration of the terminal device can be implemented via a relatively few signaling interactions between core network elements, to reduce signaling overheads in a registration process of the terminal device.

In addition, in this application, data is carried in the registration request, and the data is carried in the transmission request, so that the data is transmitted in the registration process. In this way, the session establishment procedure can be simplified, and signaling overheads in a data transmission process can be reduced, so that a data transmission delay can be reduced, and a data transmission rate can be increased.

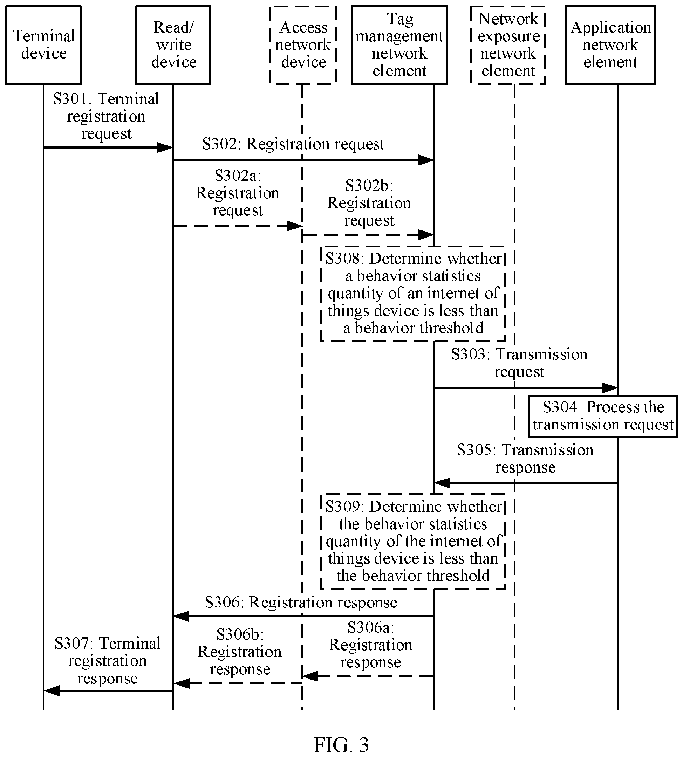

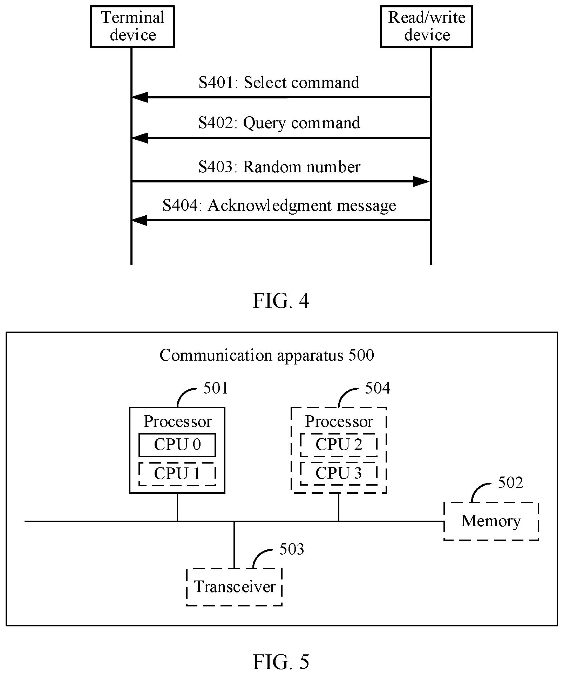

With reference to FIG. 3 and FIG. 4, the following describes in detail the communication method provided in embodiments of this application.

For example, FIG. 3 is a schematic flowchart of a communication method according to an embodiment of this application. It should be noted that a read/write device may be a reader or an access network device. When the read/write device is a reader, the schematic flowchart shown in FIG. 3 may include an access network device, and a tag management network element may be a mobility management network element or another network element having a tag management function.

As shown in FIG. 3, the communication method includes the following steps.

S301: A terminal device sends a terminal registration request to the read/write device. Correspondingly, the read/write device receives the terminal registration request from the terminal device.

For example, the terminal registration request may include identification information of the terminal device.

Optionally, the identification information of the terminal device may indicate, correspond to, or map information related to the terminal device.

For example, the tag management network element may obtain, based on the identification information of the terminal device, the information related to the terminal device.

Optionally, the identification information may include one or more of the following: a protocol control (protocol control, PC) bit, electronic product code (electronic product code, EPC), 16-bit cyclic redundancy check (cyclic redundancy check, CRC-16), and a tag permanent identifier (tag identifier, TID) of a tag device.

In some embodiments, the terminal registration request may be used to request to register the terminal device with a network.

For example, the terminal registration request may be used to request to register the identification information of the terminal device with the network.

In some embodiments, the terminal registration request may further include data and/or authentication information.

In this way, the terminal device includes the data in the terminal registration request, so that the data can be transmitted in a registration process, signaling interactions between core network elements can be reduced, and a session establishment procedure can be simplified, to reduce a data transmission delay and improve a data transmission rate.

Optionally, the data may be encrypted data. For example, the read/write device may encrypt the data by using a preconfigured key in the read/write device, and then send the encrypted data, to improve data transmission security.

Optionally, the authentication information may include information for authenticating the terminal device and/or information used by the terminal device to perform authentication.

For example, the authentication information may include but is not limited to a random number and a message authentication code (message authentication code, MAC) value.

In this way, the terminal registration request may be used to request to authenticate the terminal device and/or authenticate the network by the terminal device, so that security can be improved.

Optionally, the terminal registration request may be a terminal registration request container. This is not limited in this application.

For example, the terminal device may send a terminal registration request message to the read/write device, where the terminal registration request message may include a terminal registration request container.

Alternatively, optionally, the terminal registration request sent by the terminal device to the read/write device may be a terminal registration request message.

For example, the terminal device sends a terminal registration request message to the read/write device, where the terminal registration request message may include the identification information of the terminal device, and may further include the data and/or the authentication information.

In some embodiments, S301 in which the terminal device sends the terminal registration request to the read/write device may include: After the terminal device establishes a communication connection to the read/write device, the terminal device sends the terminal registration request to the read/write device.

For example, that the terminal device establishes the communication connection to the read/write device may mean that the terminal device and the read/write device have a bidirectional communication capability.

In some embodiments, the terminal device may send the terminal registration request to the read/write device after receiving an inventory instruction.

For example, before the terminal device initiates the registration request, an authentication server initiates an inventory procedure to the read/write device via an application network element. For the specific inventory procedure, refer to the following descriptions shown in FIG. 4. Details are not described herein again.

It should be noted that a name of the terminal registration request is not limited in this embodiment of this application, provided that a corresponding function can be implemented.

S302: The read/write device sends a registration request to the tag management network element. Correspondingly, the tag management network element receives the registration request from the read/write device.

For example, the registration request may include the identification information of the terminal device, and may further include the data and/or the authentication information. For specific implementations of the registration request, the identification information, the data, and the authentication information, refer to corresponding descriptions in S301. Details are not described herein again.

In some embodiments, the read/write device is an access network device. S302 may include Step 1: The access network device sends the registration request to the tag management network element. Correspondingly, the tag management network element receives the registration request from the access network device.

Optionally, the registration request may be a registration request container. This is not limited in this application.

For example, the access network device sends an access network registration request message to the tag management network element, where the access network registration request message includes a registration request container.

Alternatively, optionally, the registration request sent by the access network device to the tag management network element may be an access network registration request message.

For example, the access network device sends an access network registration request message to the tag management network element, where the access network registration request message may include the identification information of the terminal device, and may further include the data and/or the authentication information.

In a possible design method, the read/write device is a reader. S302 in which the read/write device sends the registration request to the tag management network element may include S302a and S302b.

S302a: The read/write device sends the registration request to the access network device. Correspondingly, the access network device receives the registration request from the read/write device.

Optionally, the registration request may be a registration request container. This is not limited in this application.

For example, the read/write device may send a read/write registration request message to the access network device, where the read/write registration request message may include a registration request container.

Alternatively, optionally, the registration request sent by the read/write device to the access network device may be a read/write registration request message.

For example, the read/write device sends a read/write registration request message to the access network device, where the read/write registration request message includes the identification information of the terminal device, and may further include the data and/or the authentication information.

S302b: The access network device sends the registration request to the tag management network element. Correspondingly, the tag management network element receives the registration request from the access network device.

It should be noted that for a specific implementation of S302b, refer to descriptions of Step 1. Details are not described herein again.

In other words, if the read/write device is a reader, the reader may send the identification information of the terminal device to the tag management network element through the access network device, and may further send the data and/or the authentication information.

In a possible design method, the communication method provided in this embodiment of this application may further include: The access network device selects the tag management network element.

For example, the access network device may select, based on preconfigured information or indication information from another network element, the tag management network element that serves the terminal device.

It should be noted that the access network device may select the tag management network element before S301 in which the read/write device (when the read/write device is the access network device) sends the registration request to the tag management network element, or before S301b in which the access network device sends the registration request to the tag management network element.

S303: The tag management network element sends a transmission request to the application network element. Correspondingly, the application network element receives the transmission request from the tag management network element.

For example, the transmission request may include the identification information of the terminal device.

In some embodiments, the transmission request may be used to request to register the terminal device with the network.

For example, the transmission request may be used to request to transmit the identification information to the application network element.

In some embodiments, the transmission request may further include the data and/or the authentication information.

Optionally, the transmission request may be further used to request to authenticate the terminal device and/or authenticate the network by the terminal device.

In this way, the tag management network element sends received data to the application network element, so that the data can be transmitted via a relatively few signaling interactions, to reduce a data transmission delay and improve a data transmission rate. The tag management network element requests the application network element to authenticate the terminal device and/or authenticate the network by the terminal device, so that security can be improved.

It should be noted that for specific implementations of the identification information of the terminal device, the data, and the authentication information, refer to corresponding descriptions in S301. Details are not described herein again.

In a possible design method, S303 in which the tag management network element sends the transmission request to the application network element may include: When a behavior statistics quantity of the terminal device is less than a behavior threshold, the tag management network element sends the transmission request to the application network element.

Optionally, the behavior statistics quantity may include a statistics quantity of behaviors or actions related to the terminal device.

Optionally, the behavior threshold may include a threshold of a quantity of behaviors or actions related to the terminal device.

In some embodiments, when the behavior statistics quantity of the terminal device is greater than or equal to the behavior threshold, the tag management network element may not perform S303, and does not send the transmission request to the application network element.

In this way, when the behavior statistics quantity is less than the behavior threshold, the tag management network element sends the transmission request to the application network element, and continues to perform a registration operation and the like (including, for example, data transmission). Otherwise, the tag management network element does not send the transmission request, and suspends the registration operation or the like, so that the terminal device can be effectively managed and charged.

In some embodiments, the behavior statistics quantity may include but is not limited to one or more of the following: an owner enterprise registration quantity, a quantity of transmissions of signaling carrying the identification information, a quantity of times that the terminal device requests registration, a quantity of times that the terminal device succeeds in registration, a quantity of times that the terminal device requests data transmission, and a quantity of times that the terminal device succeeds in data transmission.

Optionally, the owner enterprise registration quantity may be a quantity of terminal devices that belong to an enterprise corresponding to the terminal device and that register with the network.

For example, the owner enterprise registration quantity may be determined by the tag management network element based on information about the enterprise to which the terminal device belongs.

For example, a terminal device 1 belongs to an enterprise 1. It is assumed that information about the enterprise to which the terminal device 1 belongs includes that 49 terminal devices in the enterprise 1 have registered with the network, an owner enterprise registration quantity is 49.

Optionally, the signaling that carries the identification information may be a registration request that carries the identification information, and/or a transmission request that carries the identification information, and/or an inventory instruction that carries the identification information, and the like.

Optionally, the quantity of times that the terminal device requests registration may be a quantity of times that the terminal device has requested registration.

Optionally, the quantity of times that the terminal device succeeds in registration may be a quantity of times that the terminal device has succeeded in registration.

Optionally, the quantity of times that the terminal device requests data transmission may be a quantity of times that the terminal device has requested data transmission.

Optionally, the quantity of times that the terminal device succeeds in data transmission may be a quantity of times that the terminal device has succeeded in data transmission.

In some embodiments, the behavior threshold may include but is not limited to one or more of the following: an owner enterprise registration threshold, a tag signaling interaction threshold, a threshold of the quantity of times that the terminal device requests registration, a threshold of the quantity of times that the terminal device succeeds in registration, a threshold of the quantity of times that the terminal device requests data transmission, and a threshold of the quantity of times that the terminal device succeeds in data transmission.

For example, it is assumed that the owner enterprise registration threshold is 50, and the owner enterprise registration quantity is 49, the tag management network element may send the transmission request to the application network element, to request to register the terminal device with the network.

For another example, it is assumed that the owner enterprise registration threshold is 50, and the owner enterprise registration quantity is 50, the registration quantity has reached the owner enterprise registration threshold. In this case, the tag management network element does not send the transmission request to the application network element.

In this way, a quantity of registered terminal devices from the enterprise can be managed.

It should be noted that, in this embodiment of this application, examples of parameters included in the behavior statistics quantity and the behavior threshold are not described one by one, and are similar to examples of the owner enterprise registration quantity and the owner enterprise registration threshold. Details are not described herein again. In this way, behaviors of the terminal device can be managed. For example, the quantity of times that the terminal device requests registration and/or the quantity of times that the terminal device requests data transmission are managed.

For example, the behavior statistics quantity may be determined by the tag management network element based on the identification information.

In some embodiments, the communication method provided in this embodiment of this application may include S308: The tag management network element determines whether the behavior statistics quantity of the terminal device is less than the behavior threshold.

In some embodiments, the communication method provided in this embodiment of this application may include Step 2: The tag management network element determines the behavior statistics quantity based on the identification information of the terminal device.

It should be noted that Step 2 in which the tag management network element determines the behavior statistics quantity may be performed before S308 in which the tag management network element determines whether the behavior statistics quantity of the terminal device is less than the behavior threshold.

Optionally, the identification information of the terminal device may indicate, correspond to, or map information related to the terminal device.

In some embodiments, the identification information of the terminal device may indicate (or correspond to, map, or the like) information about the enterprise to which the terminal device belongs, a quantity of transmissions of signaling carrying the identification information, a quantity of times that the terminal device has requested registration, a quantity of times that the terminal device has succeeded in registration, a quantity of times that the terminal device has requested data transmission, a quantity of times that the terminal device has succeeded in data transmission, and the like.

In this way, the tag management network element may obtain, based on the identification information of the terminal device, the behavior statistics quantity corresponding to the terminal device.

In a possible design method, S303 in which the tag management network element sends the transmission request to the application network element may include: The tag management network element sends the transmission request to a network exposure network element, and the network exposure network element sends the transmission request to the application network element.

Optionally, the transmission request may be a transmission request container. This is not limited in this application.

For example, the tag management network element sends a management transmission request message to the network exposure network element, where the management transmission request message may include a transmission request container. The network exposure network element sends an open transmission request message to the application network element, where the open transmission request message includes the transmission request container.

Alternatively, optionally, the transmission request sent by the tag management network element to the network exposure network element may be a management transmission request message. The transmission request sent by the network exposure network element to the application network element may be an open transmission request message.

For example, the tag management network element sends a management transmission request message to the network exposure network element, where the management transmission request message may include the identification information of the terminal device, and may further include the data and/or the authentication information.

For example, the network exposure network element sends an open transmission request message to the application network element, where the open transmission request message may include the identification information of the terminal device, and may further include the data and/or the authentication information.

In other words, the tag management network element may request, through the network exposure network element, the application network element to register the identification information of the terminal device with the network, and may further transmit data and/or request authentication.

In a possible design method, the communication method provided in this embodiment of this application may further include: The tag management network element sends a registration response to the read/write device. Correspondingly, the read/write device receives the registration response from the tag management network element.

For example, the registration response may be a registration success response or a registration failure response.

For example, the registration success response may indicate that registration succeeds, and the registration failure response may indicate that registration fails. That is, the tag management network element may notify the read/write device of a registration success or a registration failure.

Optionally, the registration failure response may include a failure cause.

It should be noted that the registration success response may be referred to as a registration acceptance response, the registration failure response may be referred to as a registration rejection response, and the failure cause may be referred to as a rejection cause. This is not limited in this application.

In some embodiments, that the tag management network element sends the registration response to the read/write device may include: In the case that the behavior statistics quantity of the terminal device is less than the behavior threshold, the tag management network element notifies the read/write device of the registration success.

For example, if a registration success trigger condition is met, the tag management network element sends the registration success response to the read/write device.

Optionally, the registration success trigger condition may include that the behavior statistics quantity of the terminal device is less than the behavior threshold.

In some embodiments, that the tag management network element sends the registration response to the read/write device may include: In the case that the behavior statistics quantity of the terminal device is greater than or equal to the behavior threshold, the tag management network element notifies the read/write device of the registration failure.

For example, if a registration failure trigger condition is met, the tag management network element sends the registration failure response to the read/write device.

Optionally, the registration failure trigger condition may include that the behavior statistics quantity of the terminal device is greater than or equal to the behavior threshold.

Optionally, the registration failure response may include a failure cause, and the failure cause may include that the owner enterprise registration quantity is equal to the owner enterprise registration threshold, which is not listed one by one.

In this way, after the tag management network element determines whether the behavior statistics quantity of the terminal device is less than the behavior threshold in S308, the tag management network element may send a corresponding registration response to the read/write device based on a case that the registration success trigger condition is met or the registration failure trigger condition is met.

In some embodiments, after receiving the registration request, the tag management network element manages the terminal device (optional, referring to S308), and sends the registration response to the read/write device. The read/write device sends the registration response to the terminal device, and the registration procedure ends. This is applicable to a scenario in which the terminal device does not request authentication.

In other words, the tag management network element may send the registration response to the read/write device after the tag management network element receives the registration request (S302 or S302b).

For example, the registration procedure includes: S301, S302, S308 (optional), the tag management network element sends the registration response to the read/write device, and the read/write device sends the registration response to the terminal device.

For another example, the registration procedure includes: S301, S302a, S302b, S308 (optional), the tag management network element sends the registration response to the read/write device, and the read/write device sends the registration response to the terminal device.

In some other embodiments, after receiving the registration request, the tag management network element manages the terminal device (optional, referring to S308), the registration procedure of the terminal device ends, and a registration response does not need to be sent to the read/write device.

For example, the registration procedure includes S301, S302, and S308 (optional).

For example, a terminal device of this type (for example, a passive terminal device, which cannot support recording of its own registration status after power-off) does not need to know whether registration is successful, and therefore does not need to return a registration response to the terminal device.

In still some other embodiments, after receiving the registration request, the tag management network element manages the terminal device (optional, referring to S308), and then sends the registration response to the read/write device. The read/write device sends the registration response to the terminal device, and the tag management network element sends the transmission request to the application network element (refer to S303). Subsequent steps (including S304 and the like. For details, refer to the following descriptions of S304 and the like) may be performed among the application network element, the tag management network element, the read/write device, and the terminal device.

For example, the registration procedure includes: S301, S302, S308 (optional), the tag management network element sends the registration response to the read/write device, the read/write device sends the registration response to the terminal device, S303, and subsequent steps (including S304 and the like. For details, refer to the following descriptions of steps such as S304).

For another example, the registration procedure includes: S301, S302a, S302b, S308 (optional), the tag management network element sends the registration response to the read/write device, the read/write device sends the registration response to the terminal device, S303, and subsequent steps (including S304 and the like. For details, refer to the following descriptions of steps such as S304).

In still some other embodiments, after receiving the registration request, the tag management network element manages the terminal device (optional, referring to S308), the tag management network element sends the transmission request to the application network element (refer to S303), and subsequent steps (including S304 and the like. For details, refer to the following descriptions of S304 and the like) may be performed among the application network element, the tag management network element, the read/write device, and the terminal device.

For example, the registration procedure includes S301, S302, S308 (optional), S303, and subsequent steps (including S304 and the like. For details, refer to the following descriptions of steps such as S304).

For another example, the registration procedure includes S301, S302a, S302b, S308 (optional), S303, and subsequent steps (including S304 and the like. For details, refer to the following descriptions of steps such as S304).

S304: The application network element processes the transmission request.

In a possible design method, S304 may include: The application network element records the data and/or the identification information; and/or the application network element authenticates the terminal device by using the authentication information.

Optionally, the application network element records the identification information of the terminal device, so that registration of the terminal device can be implemented.

Optionally, the application network element records the data, so that data transmission can be implemented.

For example, it is assumed that the data is encrypted data, the application network element may decrypt the encrypted data by using a key. Optionally, the key may be preconfigured in the application network element.

Optionally, the application network element may authenticate the terminal device, and the terminal device may authenticate the network, so that security of the terminal device can be improved.

It should be noted that the application network element may authenticate the terminal device with reference to the authentication server. This is not specifically described in this application.

It should be noted that S304 in which the application network element processes the transmission request may be an optional step. For example, when receiving the transmission request, the application network element considers that registration of the terminal device or the identification information is completed. For another example, the data is unencrypted data, and when receiving the transmission request, the application network element considers that data transmission is completed.

S305: The application network element sends a transmission response to the tag management network element. Correspondingly, the tag management network element receives the transmission response from the application network element.

Optionally, the transmission response may include the identification information of the terminal device and/or an identifier of the enterprise to which the terminal device belongs.

In this way, the tag management network element may obtain, based on the identification information of the terminal device, the terminal device corresponding to the transmission response, manage the terminal device, and identify and collect statistics on, based on the identifier of the enterprise to which the terminal device belongs, information about the enterprise corresponding to the terminal device.

Optionally, the transmission response may be a transmission success response or a transmission failure response.

Optionally, the transmission success response may include the identification information of the terminal device and/or the identifier of the enterprise to which the terminal device belongs.

Optionally, the transmission failure response may include the identification information of the terminal device and/or the identifier of the enterprise to which the terminal device belongs.

Optionally, the transmission failure response may indicate that the transmission request is not successfully received, and the transmission success response may indicate that the transmission request is successfully received.

For example, the transmission request includes the identification information of the terminal device. It is assumed that the application network element successfully receives the identification information, the application network element sends a transmission success response to the tag management network element. Otherwise, the application network element sends a transmission failure response to the tag management network element.

For example, the transmission request includes the identification information of the terminal device and the data. It is assumed that the application network element successfully receives the identification information and the data, the application network element sends a transmission success response to the tag management network element. Otherwise, the application network element sends a transmission failure response to the tag management network element.

For example, the transmission request includes the identification information of the terminal device and the authentication information. It is assumed that the application network element successfully receives the identification information and authentication succeeds, the application network element sends a transmission success response to the tag management network element. It is assumed that authentication fails, the application network element sends a transmission failure response to the tag management network element.

For example, the transmission request includes the identification information of the terminal device, the data, and the authentication information. It is assumed that the application network element successfully receives the identification information and the data, and authentication succeeds, the application network element sends a transmission success response to the tag management network element. Otherwise, the application network element sends a transmission failure response to the tag management network element.

Optionally, S305 in which the application network element sends the transmission response to the tag management network element may include: The application network element sends the transmission response to the network exposure network element, and the network exposure network element sends the transmission response to the tag management network element. A specific implementation is similar to that of S303. That the tag management network element sends the transmission request to the application network element may include: The tag management network element sends the transmission request to the network exposure network element, and the network exposure network element sends the transmission request to the application network element. Details are not described herein again.

Optionally, the transmission response may be a transmission response container. This is not limited in this application.

In other words, the application network element may feed back, to the tag management network element through the network exposure network element, whether the transmission request is successfully received.

S306: The tag management network element sends the registration response to the read/write device. Correspondingly, the read/write device receives the registration response from the tag management network element.

For example, the registration response may be a registration success response or a registration failure response. In other words, the tag management network element may notify the read/write device of a registration success, or the tag management network element may notify the read/write device of a registration failure.

Optionally, that the tag management network element sends the registration response to the read/write device may be: The tag management network element sends a registration success response to the read/write device, or the tag management network element sends a registration failure response to the read/write device.

Optionally, the registration success response may indicate that registration succeeds, and the registration failure response may indicate that registration fails.

In some embodiments, the registration success response may further indicate that data transmission succeeds and/or authentication succeeds. The registration failure response may further indicate that data transmission fails and/or authentication fails.

In a possible design method, that the tag management network element notifies the read/write device of a registration success may include: In the case that the behavior statistics quantity of the terminal device is less than the behavior threshold and/or the tag management network element receives the transmission success response from the application network element, the tag management network element notifies the read/write device of the registration success.

For example, if a registration success trigger condition is met, the tag management network element sends the registration success response to the read/write device.

Optionally, the registration success trigger condition may include that the tag management network element receives the transmission success response from the application network element.

For example, the registration response may be determined based on the transmission response, and the tag management network element sends the registration success response to the read/write device based on the received transmission success response, to notify the read/write device of the registration success.

Alternatively, optionally, the registration success trigger condition may include that the tag management network element receives the transmission success response from the application network element, and the behavior statistics quantity of the terminal device is less than the behavior threshold.

For example, when the tag management network element receives the transmission success response from the application network element, and the behavior statistics quantity of the terminal device is less than the behavior threshold, the tag management network element sends the registration success response to the read/write device, to notify the read/write device of the registration success.

In some embodiments, that the tag management network element receives the transmission success response from the application network element may include: The tag management network element receives the transmission success response in the case that a registration timer does not expire.

Optionally, the registration timer may be a timer started when the tag management network element sends the transmission request.

Optionally, when sending the transmission request, the tag management network element may start the registration timer and configure a timeout time limit.

Optionally, if the registration timer does not expire when the tag management network element receives the transmission response (the transmission success response or the transmission failure response), the tag management network element may disable the registration timer.

In this way, the registration timer is configured on the tag management network element, so that the registration of the terminal device and the data transmission can be managed more efficiently, uncertainty of a status of the terminal device caused by loss of a transmission response can be reduced, and the terminal device can be managed more accurately.

For example, if a registration timer is configured on the terminal device, the timeout time limit of the registration timer configured on the tag management network element may be less than a timeout time limit of the registration timer configured on the terminal device. This can avoid timeout of a registration time of the terminal device caused by data transmission loss or timeout.

In this way, after the tag management network element starts the registration timer, if the transmission success response is received when the registration timer does not expire, the tag management network element may send a registration success response to the read/write device, and the read/write device may notify the corresponding terminal device of the registration success.

In a possible design method, that the tag management network element notifies the read/write device of the registration failure may include: When the behavior statistics quantity of the terminal device is greater than or equal to the behavior threshold, the registration timer expires, and/or the transmission failure response is received from the application network element, the tag management network element notifies the read/write device of the registration failure.

For example, if a registration failure trigger condition is met, the tag management network element sends the registration failure response to the read/write device.

Optionally, the registration failure trigger condition may include one or more of the following: The tag management network element receives the transmission failure response from the application network element, the behavior statistics quantity of the terminal device is greater than or equal to the behavior threshold, and the registration timer of the tag management network element expires.

Optionally, the registration failure response may include a failure cause. For example, the failure cause may include one or more of the following: The registration fails, the data transmission fails, the authentication fails, the registration timer expires, and the behavior statistics quantity is greater than or equal to the behavior threshold (for example, the owner enterprise registration quantity is equal to the owner enterprise registration threshold). In this way, the tag management network element may further notify the read/write device of the failure cause.

For example, the registration response may be determined based on the transmission response, and the tag management network element sends the registration failure response to the read/write device based on the received transmission failure response.

For example, the tag management network element manages the terminal device, and when the behavior statistics quantity of the terminal device is greater than or equal to the behavior threshold, the tag management network element sends the registration failure response to the read/write device, to notify the read/write device of the registration failure.

Optionally, that the registration timer of the tag management network element expires may include: The transmission success response or the transmission failure response is received when the registration timer of the tag management network element expires. Alternatively, no transmission response is received (for example, a transmission response is lost) when the registration timer of the tag management network element expires.

For example, when the registration timer of the tag management network element expires, the tag management network element notifies the read/write device of the registration failure, and disables the registration timer. In this way, the registration timer is configured on the tag management network element, so that a registration status of the terminal device, a data transmission status, and the like can be notified in time, and uncertainty of a status of the terminal device caused by loss of a transmission response can be reduced.

In some embodiments, that the tag management network element receives the transmission failure response from the application network element may include: The tag management network element receives the transmission failure response from the application network element when the registration timer does not expire.

For example, when the registration timer does not expire, the tag management network element receives the transmission failure response from the application network element, and sends the registration failure response to the read/write device, to notify the read/write device of the registration failure.

In some embodiments, before S306 in which the tag management network element sends the registration response to the read/write device, the communication method provided in this embodiment of this application may further include S309: The tag management network element determines whether the behavior statistics quantity of the terminal device is less than the behavior threshold.

It should be noted that an execution occasion and a quantity of execution times for the tag management network element to determine whether the behavior statistics quantity of the terminal device is less than the behavior threshold are not limited in this application. The terminal device is managed for a plurality of times, so that management accuracy can be improved.

For example, the communication method provided in this embodiment of this application may include S308 and/or S309. In other words, when receiving the registration request (refer to S302 or S302b), the tag management network element may determine whether the behavior statistics quantity of the terminal device is less than the behavior threshold (refer to S308), and/or after receiving the transmission response and before sending the registration response, the tag management network element determines whether the behavior statistics quantity of the terminal device is less than the behavior threshold (refer to S309).

Optionally, S309 in which the tag management network element determines whether the behavior statistics quantity of the terminal device is less than the behavior threshold may include: When the tag management network element receives the transmission success response from the application network element, the tag management network element determines whether the behavior statistics quantity of the terminal device is less than the behavior threshold.

In this way, when receiving the transmission success response, the tag management network element manages the terminal device; and when receiving the transmission failure response, the tag management network element may not collect statistics on or update related information about the terminal device.

Optionally, when the tag management network element receives the transmission success response from the application network element, that the tag management network element determines whether the behavior statistics quantity of the terminal device is less than the behavior threshold may include: When the tag management network element receives the transmission success response from the application network element and the transmission success response includes the identification information of the terminal device, the tag management network element determines whether the behavior statistics quantity of the terminal device is less than the behavior threshold.

For example, that the transmission success response includes the identification information of the terminal device may implicitly indicate that the tag management network element manages the terminal device.

Optionally, if the tag management network element receives the transmission success response from the application network element, but the transmission success response does not include the identification information of the terminal device, the tag management network element does not manage the terminal device, for example, does not determine whether the behavior statistics quantity of the terminal device is less than the behavior threshold.

In some embodiments, the communication method provided in this embodiment of this application may further include Step 3: The tag management network element determines the behavior statistics quantity based on the identification information of the terminal device. For an implementation of Step 3, refer to implementations of Step 2. Details are not described herein again.

It should be noted that, in this embodiment of this application, an execution occasion and a quantity of execution times for the tag management network element to determine the behavior statistics quantity are not limited, provided that the terminal device can be managed. For example, this embodiment of this application may include Step 2 and/or Step 3.

Optionally, Step 3 in which the tag management network element determines the behavior statistics quantity may be performed before S309 in which the tag management network element determines whether the behavior statistics quantity of the terminal device is less than the behavior threshold. Step 3 in which the tag management network element determines the behavior statistics quantity and Step 2 in which the tag management network element determines the behavior statistics quantity may be a same step or different steps.

For example, when the communication method provided in this embodiment of this application does not include S308 and Step 2, the behavior statistics quantity used by the tag management network element in S309 may be the behavior statistics quantity determined before S309.

For example, when the communication method provided in this embodiment of this application includes S308 and Step 2, the behavior statistics quantity used by the tag management network element in S309 may be the behavior statistics quantity determined before S309 (refer to step 3). For example, the behavior statistics quantity determined before S309 may include the behavior statistics quantity determined before S308 (refer to step 2) and the behavior statistics quantity determined after S308 and before S309.

In other words, the behavior statistics quantity used by the tag management network element in different steps may be obtained in a same step. For example, both the behavior statistics quantity used by the tag management network element in S309 and the behavior statistics quantity used by the tag management network element in S308 may be the behavior statistics quantity obtained in Step 2.

In a possible design method, the read/write device is an access network device, and S306 may include Step 4: The tag management network element sends the registration response to the access network device. Correspondingly, the access network device receives the registration response from the tag management network element.

Optionally, the registration response may be a registration response container. This is not limited in this application.

For example, the tag management network element sends a tag registration response message to the access network device, where the tag registration response message includes a registration response container.

Alternatively, optionally, the registration response sent by the tag management network element to the access network device may be a tag registration response message.

For example, the tag registration response message may indicate that registration succeeds or registration fails.

In some embodiments, the tag registration response message may further indicate that data transmission succeeds and/or authentication succeeds. Alternatively, the tag registration response message may further indicate data transmission fails and/or authentication fails.

In a possible design method, the read/write device is a reader. S306 in which the tag management network element sends the registration response to the read/write device may include S306a and S306b.

S306a: The tag management network element sends the registration response to the access network device. Correspondingly, the access network device receives the registration response from the tag management network element.

It should be noted that for a specific implementation of S306a, refer to descriptions of Step 4. Details are not described herein again.

S306b: The access network device sends the registration response to the reader. Correspondingly, the reader receives the registration response from the access network device.

Optionally, the registration response may be a registration response container. This is not limited in this application.

For example, the access network device sends an access network registration response message to the reader, where the access network registration response message includes a registration response container.

Alternatively, optionally, the registration response sent by the access network device to the reader may be an access network registration response message.

For example, the access network registration response message may indicate that registration succeeds or registration fails.

In some embodiments, the access network registration response message may further indicate that data transmission succeeds and/or authentication succeeds. Alternatively, the access network registration response message may further indicate data transmission fails and/or authentication fails.

That is, if the read/write device is a reader, the tag management network element may send the registration response to the reader through the access network device.

It should be noted that, in this embodiment of this application, Step 1 to Step 4 are merely added step numbers for ease of understanding, and the step numbers do not limit an execution sequence of the steps.

S307: The terminal device receives a terminal registration response from the read/write device. Correspondingly, the read/write device sends the terminal registration response to the terminal device.

Optionally, the read/write device may notify the terminal device of a registration success or a registration failure, and may further notify the terminal device whether data transmission succeeds and/or whether authentication succeeds.

It should be noted that for a specific implementation of the terminal registration response, refer to descriptions corresponding to the registration response in S306. Details are not described herein again.

In this way, the read/write device sends the registration failure response or the registration success response to the terminal device, to notify the terminal device of the registration success or the registration failure.

According to the communication method shown in FIG. 3, the tag management network element receives the registration request used to request to register the identification information with the network; sends the transmission request to the application network element, to request to transmit the identification information to the application network element; and feeds back the registration response to the read/write device. The registration response may indicate that registration succeeds or registration fails. In this way, registration of the terminal device can be implemented via a relatively few signaling interactions between core network elements, to reduce signaling overheads in the registration process of the terminal device.

For example, FIG. 4 is a schematic flowchart of a communication method according to an embodiment of this application. The method shown in FIG. 4 specifically describes an inventory procedure. The communication method shown in FIG. 4 may be used in combination with the communication method shown in FIG. 3. The communication method shown in FIG. 4 may be performed before the communication method shown in FIG. 3. For example, after receiving an acknowledgment message in S404, a terminal device initiates a registration request (performs S301).

As shown in FIG. 4, the communication method includes the following steps.

S401: A read/write device sends a select (select) command. Correspondingly, the terminal device receives the select command from the read/write device.

For example, the select command may include area location information, and the area location information may indicate a specific area range.

For example, the area location information may be EPC code of some specific ranges.

Optionally, after obtaining the select command through listening, the terminal device determines whether the terminal device belongs to a range indicated by the area location information. If the terminal device belongs to the range indicated by the area location information, the terminal device feeds back information (for example, sends a random number) after subsequently obtaining a query (query) command through listening. If the terminal device does not belong to the range indicated by the area location information, no action is performed subsequently.

Optionally, before S401, an authentication server may send an inventory instruction to the read/write device through an application network element, and after receiving the inventory instruction, the read/write device sends the select command.

Optionally, the inventory instruction may include area location information, and/or identification information of the terminal device, and the like. In this way, inventory may be performed on the terminal device in the range indicated by the area location information.

S402: The read/write device sends a query command. Correspondingly, the terminal device receives the query command from the read/write device.

S403: The terminal device sends a random number to the read/write device. Correspondingly, the read/write device receives the random number from the terminal device.

Optionally, S403 in which the read/write device receives the random number from the terminal device may include: If the terminal device determines that the terminal device belongs to the range indicated by the area location information, the terminal device sends the random number to the read/write device.

For example, the random number may be a 16-bit random number or a pseudo-random number (16-bit random number or pseudo-random number, RN16).

Optionally, the terminal device may send the random number to the read/write device in a contention manner.

S404: The read/write device sends the acknowledgment (acknowledgment, ACK) message to the terminal device. Correspondingly, the terminal device receives the acknowledgment message from the read/write device.

Optionally, the acknowledgment message may include a random number, for example, the random number RN16 received in S403.

For example, after receiving the acknowledgment message and verifying that the random number in the acknowledgment message is the same as the random number sent by the terminal device to the read/write device, the terminal device may send a terminal registration request to the read/write device (refer to S301).

For example, the registration request may include the identification information of the terminal device.

In this way, after receiving the registration request, the read/write device may report the identification information to the authentication server through a tag management network element, the application network element, and the like, and the authentication server obtains the identification information of the terminal device in the area range indicated by the area location information.

It should be noted that the method shown in FIG. 4 describes the specific inventory procedure. The communication method shown in FIG. 4 may be performed before the communication method shown in FIG. 3. The terminal device receives the registration response, and inventory on the terminal device is completed. In this way, registration of the terminal device is implemented via a relatively few signaling interactions between core network elements, so that signaling overheads in a registration process of the terminal device can be reduced. In addition, inventory efficiency can be improved.

In this application, unless otherwise specified, for same or similar parts in embodiments, refer to each other. In embodiments of this application and the implementations/implementation methods in embodiments, unless otherwise specified or a logical collision occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The following implementations of this application are not intended to limit the protection scope of this application.

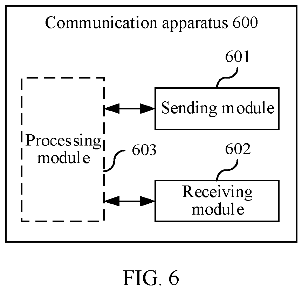

The foregoing describes, in detail with reference to FIG. 3 and FIG. 4, the communication methods provided in embodiments of this application. The following describes in detail communication apparatuses provided in embodiments of this application with reference to FIG. 5 and FIG. 6. The communication apparatuses are configured to implement the communication methods in FIG. 3 and FIG. 4.

FIG. 5 is a diagram of a structure of a communication apparatus according to an embodiment of this application. The communication apparatus 500 may be a tag management network element, an application network element, or a terminal device, or may be a chip used in the tag management network element, the application network element, or the terminal device, or may be another component having a corresponding function. As shown in FIG. 5, the communication apparatus 500 may include a processor 501. Optionally, the communication apparatus 500 may further include one or more of a memory 502 and a transceiver 503. The processor 501 and the one or more of the memory 502 and the transceiver 503 may be coupled, for example, may be connected through a communication bus, or the processor 501 may be used independently.

The following describes each component of the communication apparatus 500 in detail with reference to FIG. 5.

The processor 501 is a control center of the communication apparatus 500, and may be one processor or may be a collective term of a plurality of processing elements. For example, the processor 501 may be one or more central processing units (central processing units, CPUs), or may be an application-specific integrated circuit (application-specific integrated circuit, ASIC), or one or more integrated circuits configured to implement embodiments of this application, for example, one or more microprocessors (digital signal processors, DSPs) or one or more field programmable gate arrays (field programmable gate arrays, FPGAs).

The processor 501 may execute various functions of the communication apparatus 500 by running or executing a software program stored in the memory 502 and invoking data stored in the memory 502.

During specific implementation, in an embodiment, the processor 501 may include one or more CPUs, for example, CPU 0 and CPU 1 shown in FIG. 5.

During specific implementation, in an embodiment, the communication apparatus 500 may alternatively include a plurality of processors, for example, the processor 501 and a processor 504 shown in FIG. 5. Each of the processors may be a single-core processor (single-CPU) or may be a multi-core processor (multi-CPU). The processor herein may be one or more communication devices, circuits, and/or processing cores configured to process data (for example, computer program instructions).

Optionally, the memory 502 may be a read-only memory (read-only memory, ROM) or another type of static storage communication device that can store static information and instructions, or a random access memory (random access memory, RAM) or another type of dynamic storage communication device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile disc, a Blu-ray disc, and the like), a magnetic disk storage medium or another magnetic storage communication device, or any other medium that can be used to carry or store expected program code in a form of an instruction or a data structure and that can be accessed by a computer. However, this is not limited thereto. The memory 502 may be integrated with the processor 501, or may exist independently, and is coupled to the processor 501 through an input/output port (not shown in FIG. 5) of the communication apparatus 500. This is not specifically limited in this embodiment of this application.

For example, the input port may be configured to implement a receiving function performed by the tag management network element, the application network element, or the terminal device in any one of the foregoing method embodiments, and the output port may be configured to implement a sending function performed by the tag management network element, the application network element, or the terminal device in any one of the foregoing method embodiments.

The memory 502 may be configured to store a software program for performing the solutions in this application, and the processor 501 controls execution. For the specific implementation, refer to the following method embodiments. Details are not described herein again.

Optionally, the transceiver 503 is configured to communicate with another communication apparatus. For example, when the communication apparatus 500 is a tag management network element, the transceiver 503 may be configured to communicate with an access network device, a read/write device, a network exposure network element, and/or an application network element. For another example, when the communication apparatus 500 is an application network element, the transceiver 503 may be configured to communicate with a tag management network element and/or a network exposure network element. For another example, when the communication apparatus 500 is a terminal device, the transceiver 503 may be configured to communicate with a read/write device and/or an access network device.

In addition, the transceiver 503 may include a receiver and a transmitter (not separately shown in FIG. 5). The receiver is configured to implement a receiving function, and the transmitter is configured to implement a sending function. The transceiver 503 may be integrated with the processor 501, or may exist independently, and is coupled to the processor 501 through an input/output port (not shown in FIG. 5) of the communication apparatus 500. This is not specifically limited in this embodiment of this application.

It should be noted that the structure of the communication apparatus 500 shown in FIG. 5 does not constitute a limitation on the communication apparatus. An actual communication apparatus may include more or fewer components than those shown in the figure, or combine some components, or have different component arrangement.

Actions of the tag management network element in FIG. 3 and FIG. 4 may be performed by the processor 501 in the communication apparatus 500 shown in FIG. 5 by invoking application program code stored in the memory 502, to indicate the tag management network element to perform the actions.

Actions of the application network element in FIG. 3 and FIG. 4 may be performed by the processor 501 in the communication apparatus 500 shown in FIG. 5 by invoking the application program code stored in the memory 502, to indicate the application network element to perform the actions. This is not limited in this embodiment.

Actions of the terminal device in FIG. 3 and FIG. 4 may be performed by the processor 501 in the communication apparatus 500 shown in FIG. 5 by invoking the application program code stored in the memory 502, to separately indicate the terminal device to perform the actions. This is not limited in this embodiment.

When the communication apparatus is a tag management network element, the communication apparatus 500 may perform any one or more possible design manners of the tag management network element in the foregoing method embodiments.

For example, the transceiver 503 is configured to receive a registration request from the read/write device. The transceiver 503 is further configured to send a transmission request to the application network element. The transceiver 503 is further configured to notify the read/write device of a registration success. The registration request includes identification information of the terminal device, and the registration request is used to request to register the identification information with a network. The transmission request includes the identification information, and the transmission request is used to request to transmit the identification information to the application network element.

Alternatively, for example, the transceiver 503 is configured to receive a registration request from the read/write device. The transceiver 503 is further configured to: in the case that a behavior statistics quantity of the terminal device is greater than or equal to a behavior threshold, a registration timer expires, and/or a transmission failure response is received from the application network element, notify the read/write device of a registration failure. The registration request includes identification information of the terminal device, and the registration request is used to request to register the identification information with a network. The transmission failure response indicates that a transmission request is not successfully received, the transmission request includes the identification information, and the transmission request is used to request to transmit the identification information to the application network element. Optionally, the transmission request is sent by the communication apparatus 500 to the application network element.

It should be noted that all related content of the steps in the foregoing method embodiments may be cited in function descriptions of corresponding functional modules. Details are not described herein again.

When the communication apparatus is an application network element, the communication apparatus 500 may perform any one or more possible design manners of the application network element in the foregoing method embodiments.

For example, the transceiver 503 is configured to receive a transmission request from the tag management network element. The processor 501 is configured to process the transmission request. The transceiver 503 is configured to send a transmission success response to the tag management network element. The transmission request includes identification information of the terminal device. The transmission success response indicates that the transmission request is successfully received.

It should be noted that all related content of the steps in the foregoing method embodiments may be cited in function descriptions of corresponding functional modules. Details are not described herein again.

When the communication apparatus is a terminal device, the communication apparatus 500 may perform any one or more possible design manners of the terminal device in the foregoing method embodiments.

For example, the transceiver 503 is configured to send a terminal registration request to the read/write device. The transceiver 503 is configured to receive a registration success response or a registration failure response from the read/write device. The terminal registration request includes identification information of the communication apparatus 500, and the terminal registration request is used to request to register the identification information with a network. The registration success response indicates that registration succeeds, and the registration failure response indicates that registration fails.

It should be noted that all related content of the steps in the foregoing method embodiments may be cited in function descriptions of corresponding functional modules. Details are not described herein again.

FIG. 6 is a diagram of a structure of another communication apparatus according to an embodiment of this application. For ease of description, FIG. 6 shows only main components of the communication apparatus.

The communication apparatus 600 includes a sending module 601 and a receiving module 602. The communication apparatus 600 may be the tag management network element, the application network element, or the terminal device in the foregoing method embodiments. The sending module 601 may also be referred to as a sending unit, and is configured to implement a sending function performed by the tag management network element, the application network element, or the terminal device in any one of the foregoing method embodiments. The receiving module 602 may also be referred to as a receiving unit, and is configured to implement a receiving function performed by the tag management network element, the application network element, or the terminal device in any one of the foregoing method embodiments.

It should be noted that the sending module 601 and the receiving module 602 may be separately disposed, or may be integrated into one module, namely, a transceiver module. Specific implementations of the receiving module and the sending module are not specifically limited in this application. The transceiver module may include a transceiver circuit, a transceiver machine, a transceiver, or a communication interface.

Optionally, the communication apparatus 600 may further include a processing module 603 and a storage module (not shown in FIG. 6). The storage module stores a program or instructions. When the processing module 603 executes the program or the instructions, the communication apparatus 600 is enabled to perform the method in any one of the foregoing method embodiments.

The processing module 603 may be configured to implement a processing function performed by the tag management network element, the application network element, or the terminal device in any one of the foregoing method embodiments. The processing module 603 may be a processor.

In this embodiment, the communication apparatus 600 is presented in a form of functional modules obtained through division in an integrated manner. The "module" herein may be a specific ASIC, a circuit, a processor that executes one or more software or firmware programs, a memory, an integrated logic circuit, and/or another component that can provide the foregoing functions. In a simple embodiment, a person skilled in the art may figure out that the communication apparatus 600 may be in a form of the communication apparatus 500 shown in FIG. 5.

For example, the processor 501 in the communication apparatus 500 shown in FIG. 5 may invoke computer-executable instructions stored in the memory 502, so that the communication method in the foregoing method embodiments is performed.

Specifically, functions/implementation processes of the processing module 603 in FIG. 6 and the storage module may be implemented by the transceiver 503 in the communication apparatus 500 shown in FIG. 5. Functions/implementation processes of the processing module 603 in FIG. 6 may be implemented by the processor 501 in the communication apparatus 500 shown in FIG. 5 by invoking the computer-executable instructions stored in the memory 502.

The communication apparatus 600 provided in this embodiment may perform the foregoing communication methods. Therefore, for technical effects that can be achieved by the communication apparatus 600, refer to the foregoing method embodiments. Details are not described herein again.

In a possible design solution, the communication apparatus 600 shown in FIG. 6 is applicable to the system shown in FIG. 1, and performs a function of the tag management network element in the communication method in any one of the foregoing method embodiments.

The receiving module 602 is configured to receive a registration request from a read/write device. The sending module 601 is configured to send a transmission request to an application network element. The sending module 601 is further configured to notify the read/write device of a registration success. The registration request includes identification information of the terminal device, and the registration request is used to request to register the identification information with a network. The transmission request includes the identification information, and the transmission request is used to request to transmit the identification information to the application network element.

In a possible design manner, the sending module 601 is further configured to: in the case that a behavior statistics quantity of the terminal device is less than a behavior threshold and/or a transmission success response is received from the application network element, notify the read/write device of the registration success. The transmission success response indicates that the transmission request is successfully received, and the behavior statistics quantity is determined based on the identification information.

In a possible design manner, that the communication apparatus 600 receives a transmission success response from the application network element may include: The communication apparatus 600 receives the transmission success response in the case that a registration timer does not expire. The registration timer is a timer started when the communication apparatus 600 sends the transmission request.

In a possible design manner, the transmission success response may include the identification information of the terminal device and/or an identifier of an enterprise to which the terminal device belongs.

In a possible design manner, the sending module 601 is further configured to send the transmission request to the application network element in the case that the behavior statistics quantity of the terminal device is less than the behavior threshold. The behavior statistics quantity is determined by the communication apparatus 600 based on the identification information.

In a possible design manner, the behavior statistics quantity may include one or more of the following: an owner enterprise registration quantity, a quantity of transmissions of signaling carrying the identification information, a quantity of times that the terminal device requests registration, a quantity of times that the terminal device succeeds in registration, a quantity of times that the terminal device requests data transmission, and a quantity of times that the terminal device succeeds in data transmission. The owner enterprise registration quantity is a quantity of terminal devices that belong to the enterprise corresponding to the terminal device and that register with the network.

In a possible design manner, the behavior threshold may include one or more of the following: an owner enterprise registration threshold, a tag signaling interaction threshold, a threshold of the quantity of times that the terminal device requests registration, a threshold of the quantity of times that the terminal device succeeds in registration, a threshold of the quantity of times that the terminal device requests data transmission, and a threshold of the quantity of times that the terminal device succeeds in data transmission.

In a possible design manner, the registration request may further include data and/or authentication information, and the authentication information includes information for authenticating the terminal device and/or information used by the terminal device for authentication.

In a possible design manner, the transmission request may further include the data and/or the authentication information.

It should be noted that the receiving module 602 and the sending module 601 may be separately disposed, or may be integrated into one module, namely, a transceiver module. Specific implementations of the receiving module 602 and the sending module 601 are not specifically limited in this application.

Optionally, the communication apparatus 600 may further include a processing module 603 and a storage module (not shown in FIG. 6). The storage module stores a program or instructions. When the processing module 603 executes the program or the instructions, the communication apparatus 600 is enabled to perform a function of the tag management network element in the communication method in any one of the foregoing method embodiments.

It should be noted that the communication apparatus 600 may be a tag management network element, or may be a chip (system) or another part or component that may be disposed in the tag management network element. This is not limited in this application.

In addition, for technical effects of the communication apparatus 600, refer to the technical effects of the communication methods shown in FIG. 3 and FIG. 4. Details are not described herein again.

In another possible design solution, the communication apparatus 600 shown in FIG. 6 is applicable to the system shown in FIG. 1, and performs a function of the tag management network element in the communication method in any one of the foregoing method embodiments.

The receiving module 602 is configured to receive a registration request from a read/write device. The sending module 601 is further configured to: when a behavior statistics quantity of a terminal device is greater than or equal to a behavior threshold, a registration timer expires, and/or a transmission failure response is received from an application network element, notify the read/write device of a registration failure. The registration request includes identification information of the terminal device, and the registration request is used to request to register the identification information with a network. The transmission failure response indicates that a transmission request is not successfully received, the transmission request includes the identification information, and the transmission request is used to request to transmit the identification information to the application network element. Optionally, the transmission request is sent by the communication apparatus 600 to the application network element.

In a possible design manner, that the communication apparatus 600 receives a transmission failure response from an application network element may include: The communication apparatus 600 receives the transmission failure response from the application network element when the registration timer does not expire.

In a possible design manner, the transmission failure response may include the identification information of the terminal device and/or an identifier of an enterprise to which the terminal device belongs.

In a possible design manner, the registration timer may be a timer started when the tag management network element sends the transmission request.

In a possible design manner, the behavior statistics quantity may be determined by the tag management network element based on the identification information.

In a possible design manner, the behavior statistics quantity may include one or more of the following: an owner enterprise registration quantity, a quantity of transmissions of signaling carrying the identification information, a quantity of times that the terminal device requests registration, a quantity of times that the terminal device succeeds in registration, a quantity of times that the terminal device requests data transmission, and a quantity of times that the terminal device succeeds in data transmission. The owner enterprise registration quantity is a quantity of terminal devices that belong to the enterprise corresponding to the terminal device and that register with the network.

In a possible design manner, the behavior threshold may include one or more of the following: an owner enterprise registration threshold, a tag signaling interaction threshold, a threshold of the quantity of times that the terminal device requests registration, a threshold of the quantity of times that the terminal device succeeds in registration, a threshold of the quantity of times that the terminal device requests data transmission, and a threshold of the quantity of times that the terminal device succeeds in data transmission.

In a possible design manner, the registration request may further include data and/or authentication information, and the authentication information includes information for authenticating the terminal device and/or information used by the terminal device for authentication.

In a possible design manner, the transmission request may further include the data and/or the authentication information.

It should be noted that the receiving module 602 and the sending module 601 may be separately disposed, or may be integrated into one module, namely, a transceiver module. Specific implementations of the receiving module 602 and the sending module 601 are not specifically limited in this application.

Optionally, the communication apparatus 600 may further include a processing module 603 and a storage module (not shown in FIG. 6). The storage module stores a program or instructions. When the processing module 603 executes the program or the instructions, the communication apparatus 600 is enabled to perform a function of the tag management network element in the communication method in any one of the foregoing method embodiments.

It should be noted that the communication apparatus 600 may be a tag management network element, or may be a chip (system) or another part or component that may be disposed in the tag management network element. This is not limited in this application.

In addition, for technical effects of the communication apparatus 600, refer to the technical effects of the communication methods shown in FIG. 3 and FIG. 4. Details are not described herein again.

In still another possible design solution, the communication apparatus 600 shown in FIG. 6 is applicable to the system shown in FIG. 1, and performs a function of the application network element in the communication method in any one of the foregoing method embodiments.

The receiving module 602 is configured to receive a transmission request from a tag management network element. The processing module 603 is configured to process the transmission request. The sending module 601 is configured to send a transmission success response to the tag management network element. The transmission request includes identification information of a terminal device. The transmission success response indicates that the transmission request is successfully received.

In a possible design manner, the transmission request may further include data and/or authentication information, and the authentication information may include information for authenticating the terminal device and/or information used by the terminal device for authentication.

In a possible design manner, the processing module 603 is further configured to record the data and/or the identification information; and/or the processing module 603 is further configured to authenticate the terminal device by using the authentication information.

In a possible design manner, the transmission success response may include the identification information of the terminal device and/or an identifier of the communication apparatus 600.

It should be noted that the receiving module 602 and the sending module 601 may be separately disposed, or may be integrated into one module, namely, a transceiver module. Specific implementations of the receiving module 602 and the sending module 601 are not specifically limited in this application.

Optionally, the communication apparatus 600 may further include a storage module (not shown in FIG. 6). The storage module stores a program or instructions. When the processing module 603 executes the program or the instructions, the communication apparatus 600 is enabled to perform a function of the application network element in the communication method in any one of the foregoing method embodiments.

It should be noted that the communication apparatus 600 may be an application network element, or may be a chip (system) or another part or component that may be disposed in the application network element. This is not limited in this application.

In addition, for technical effects of the communication apparatus 600, refer to the technical effects of the communication methods shown in FIG. 3 and FIG. 4. Details are not described herein again.

In still another possible design solution, the communication apparatus 600 shown in FIG. 6 is applicable to the system shown in FIG. 1, and performs a function of the terminal device in the communication method in any one of the foregoing method embodiments.

The sending module 601 is configured to send a terminal registration request to a read/write device. The receiving module 602 is configured to receive a registration success response or a registration failure response from the read/write device. The terminal registration request includes identification information of the communication apparatus, and the terminal registration request is used to request to register the identification information with a network. The registration success response indicates that registration succeeds, and the registration failure response indicates that registration fails.

In a possible design manner, the terminal registration request may further include data and/or authentication information, and the authentication information includes information for authenticating a terminal device and/or information used by the terminal device for authentication.

In a possible design manner, the sending module 601 is further configured to send the terminal registration request to the read/write device after the communication apparatus establishes a communication connection to the read/write device.

It should be noted that the receiving module 602 and the sending module 601 may be separately disposed, or may be integrated into one module, namely, a transceiver module. Specific implementations of the receiving module 602 and the sending module 601 are not specifically limited in this application.

Optionally, the communication apparatus 600 may further include a processing module 603 and a storage module (not shown in FIG. 6). The storage module stores a program or instructions. When the processing module 603 executes the program or the instructions, the communication apparatus 600 is enabled to perform a function of the terminal device in the communication method in any one of the foregoing method embodiments.

It should be noted that the communication apparatus 600 may be a terminal device, or may be a chip (system) or another part or component that may be disposed in the terminal device. This is not limited in this application.

In addition, for technical effects of the communication apparatus 600, refer to the technical effects of the communication methods shown in FIG. 3 and FIG. 4. Details are not described herein again.

An embodiment of this application provides a communication system. The communication system includes a tag management network element and an application network element. The tag management network element is configured to perform an action of the tag management network element in the foregoing method embodiments, and the application network element is configured to perform an action of the application network element in the foregoing method embodiments.

Optionally, the communication system may further include a terminal device and/or a read/write device. The terminal device is configured to perform an action of the terminal device in the foregoing method embodiments, and the read/write device is configured to perform an action of the read/write device in the foregoing method embodiments. For a specific execution method and process, refer to the foregoing method embodiments. Details are not described herein again.

An embodiment of this application provides a chip system. The chip system includes a logic circuit and an input/output port. The logic circuit may be configured to implement a processing function related to the communication method provided in embodiments of this application, and the input/output port may be configured to implement sending and receiving functions related to the communication method provided in embodiments of this application.

For example, the input port may be configured to implement a receiving function related to the communication method provided in embodiments of this application, and the output port may be configured to implement a sending function related to the communication method provided in embodiments of this application.

For example, the processor in the communication apparatus 500 may be configured to perform, for example, but not limited to, baseband-related processing, and the transceiver in the communication apparatus 500 may be configured to perform, for example, but not limited to, radio frequency receiving and sending. The foregoing components may be separately disposed on chips that are independent of each other, or at least some or all of the components may be disposed on a same chip. For example, the processor may be further divided into an analog baseband processor and a digital baseband processor. The analog baseband processor and the transceiver may be integrated on a same chip, and the digital baseband processor may be disposed on an independent chip. With continuous development of integrated circuit technologies, more and more components may be integrated on a same chip. For example, the digital baseband processor may be integrated on a same chip with a plurality of application processors (for example, but not limited to a geometric processor and a multimedia processor). The chip may be referred to as a system-on-chip (system-on-chip). Whether components are independently disposed on different chips or are integrated and disposed on one or more chips usually depends on specific requirements of a product design. Specific implementation forms of the components are not limited in embodiments of the present invention.

In a possible design, the chip system further includes a memory, and the memory is configured to store program instructions and data for implementing functions related to the communication method provided in embodiments of this application.

The chip system may include a chip, or may include a chip and another discrete component.

An embodiment of this application provides a computer-readable storage medium. The computer-readable storage medium stores a computer program or instructions. When the computer program or the instructions are run on a computer, the communication method provided in embodiments of this application is performed.

An embodiment of this application provides a computer program product. The computer program product includes a computer program or instructions. When the computer program or the instructions are run on a computer, the communication method provided in embodiments of this application is performed.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example but not limitative description, random access memories (random access memories, RAMs) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by software, hardware (for example, a circuit), firmware, or any combination thereof. When the software is used to implement embodiments, the foregoing embodiments may be implemented completely or partially in a form of a computer program product. The computer program product includes one or more computer instructions or computer programs. When the computer instructions or the computer programs are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid state drive.

It should be understood that the term "and/or" in this specification describes only an association relationship between associated objects and indicates that three relationships may exist. For example, A and/or B may indicate the following three cases: Only A exists, both A and B exist, and only B exists, where A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof refers to any combination of these items, including any combination of singular items (pieces) or plural items (pieces). For example, at least one of a, b, or c may indicate: a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, or each unit may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, a network device, or the like) to perform all or some of the steps of the method in embodiments of this application. The storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving a registration request from a read/write device, wherein the registration request comprises identification information of a terminal device, and the registration request is used to request to register the identification information with a network;
sending a transmission request to an application network element, wherein the transmission request comprises the identification information, and the transmission request is used to request to transmit the identification information to the application network element; and
notifying the read/write device of a registration success.

2. The communication method according to claim 1, wherein the notifying the read/write device of a registration success comprises:
in the case that a behavior statistics quantity of the terminal device is less than a behavior threshold and/or a transmission success response is received from the application network element, notifying the read/write device of the registration success, wherein the transmission success response indicates that the transmission request is successfully received, and the behavior statistics quantity is determined based on the identification information.

3. The communication method according to claim 2, wherein that a transmission success response is received from the application network element comprises: the transmission success response is received in the case that a registration timer does not expire, wherein the registration timer is a timer started when the transmission request is sent.

4. The communication method according to claim 2 or 3, wherein the transmission success response comprises the identification information of the terminal device and/or an identifier of an enterprise to which the terminal device belongs.

5. The communication method according to any one of claims 1 to 4, wherein the sending a transmission request to an application network element comprises:
sending the transmission request to the application network element in the case that the behavior statistics quantity of the terminal device is less than the behavior threshold, wherein the behavior statistics quantity is determined based on the identification information.

6. The communication method according to any one of claims 2 to 5, wherein the behavior statistics quantity comprises one or more of the following: an owner enterprise registration quantity, a quantity of transmissions of signaling carrying the identification information, a quantity of times that the terminal device requests registration, a quantity of times that the terminal device succeeds in registration, a quantity of times that the terminal device requests data transmission, and a quantity of times that the terminal device succeeds in data transmission, wherein the owner enterprise registration quantity is a quantity of terminal devices that belong to the enterprise corresponding to the terminal device and that register with the network.

7. The communication method according to any one of claims 2 to 6, wherein the behavior threshold comprises one or more of the following: an owner enterprise registration threshold, a tag signaling interaction threshold, a threshold of the quantity of times that the terminal device requests registration, a threshold of the quantity of times that the terminal device succeeds in registration, a threshold of the quantity of times that the terminal device requests data transmission, and a threshold of the quantity of times that the terminal device succeeds in data transmission.

8. The communication method according to any one of claims 1 to 7, wherein the registration request further comprises data and/or authentication information, and the authentication information comprises information for authenticating the terminal device and/or information used by the terminal device for authentication.

9. The communication method according to claim 8, wherein the transmission request further comprises the data and/or the authentication information.

10. A communication method, comprising:
receiving a registration request from a read/write device, wherein the registration request comprises identification information of a terminal device, and the registration request is used to request to register the identification information with a network; and
in the case that a behavior statistics quantity of the terminal device is greater than or equal to a behavior threshold, a registration timer expires, and/or a transmission failure response is received from an application network element, notifying the read/write device of a registration failure, wherein
the transmission failure response indicates that a transmission request is not successfully received, the transmission request comprises the identification information, and the transmission request is used to request to transmit the identification information to the application network element.

11. The communication method according to claim 10, wherein that a transmission failure response is received from an application network element comprises: the transmission failure response is received from the application network element in the case that the registration timer does not expire.

12. The communication method according to claim 10 or 11, wherein the transmission failure response comprises the identification information of the terminal device and/or an identifier of an enterprise to which the terminal device belongs.

13. The communication method according to any one of claims 10 to 12, wherein the registration timer is a timer started when the transmission request is sent.

14. The communication method according to any one of claims 10 to 13, wherein the behavior statistics quantity is determined based on the identification information.

15. The communication method according to any one of claims 10 to 14, wherein the behavior statistics quantity comprises one or more of the following: an owner enterprise registration quantity, a quantity of transmissions of signaling carrying the identification information, a quantity of times that the terminal device requests registration, a quantity of times that the terminal device succeeds in registration, a quantity of times that the terminal device requests data transmission, and a quantity of times that the terminal device succeeds in data transmission, wherein the owner enterprise registration quantity is a quantity of terminal devices that belong to the enterprise corresponding to the terminal device and that register with the network.

16. The communication method according to any one of claims 10 to 15, wherein the behavior threshold comprises one or more of the following: an owner enterprise registration threshold, a tag signaling interaction threshold, a threshold of the quantity of times that the terminal device requests registration, a threshold of the quantity of times that the terminal device succeeds in registration, a threshold of the quantity of times that the terminal device requests data transmission, and a threshold of the quantity of times that the terminal device succeeds in data transmission.

17. The communication method according to any one of claims 10 to 16, wherein the registration request further comprises data and/or authentication information, and the authentication information comprises information for authenticating the terminal device and/or information used by the terminal device to perform authentication.

18. The communication method according to claim 17, wherein the transmission request further comprises the data and/or the authentication information.

19. A communication method, comprising:
receiving, by an application network element, a transmission request from a tag management network element, wherein the transmission request comprises identification information of a terminal device;
processing, by the application network element, the transmission request; and
sending, by the application network element, a transmission success response to the tag management network element, wherein the transmission success response indicates that the transmission request is successfully received.

20. The communication method according to claim 19, wherein the transmission request further comprises data and/or authentication information, and the authentication information comprises information for authenticating the terminal device and/or information used by the terminal device to perform authentication.

21. The communication method according to claim 20, wherein the processing, by the application network element, the transmission request comprises:
recording, by the application network element, the data and/or the identification information; and/or
authenticating, by the application network element, the terminal device by using the authentication information.

22. The communication method according to any one of claims 19 to 21, wherein the transmission success response comprises the identification information of the terminal device and/or an identifier of an enterprise to which the terminal device belongs.

23. A communication method, comprising:
sending, by a terminal device, a terminal registration request to a read/write device, wherein the terminal registration request comprises identification information of the terminal device, and the terminal registration request is used to request to register the identification information with a network; and
receiving, by the terminal device, a registration success response or a registration failure response from the read/write device, wherein the registration success response indicates that registration succeeds, and the registration failure response indicates that registration fails.

24. The communication method according to claim 23, wherein the terminal registration request further comprises data and/or authentication information, and the authentication information comprises information for authenticating the terminal device and/or information used by the terminal device to perform authentication.

25. The communication method according to claim 23 or 24, wherein the sending, by a terminal device, a terminal registration request to a read/write device comprises:
sending, by the terminal device, the terminal registration request to the read/write device after the terminal device establishes a communication connection to the read/write device.

26. A communication apparatus, wherein the communication apparatus comprises a unit or a module configured to perform the method according to any one of claims 1 to 25.

27. A communication apparatus, wherein the communication apparatus comprises a processor, and the processor is configured to perform the communication method according to any one of claims 1 to 25.

28. A computer-readable storage medium, wherein the computer-readable storage medium stores a computer program or instructions; and when the computer program or the instructions are run on a computer, the communication method according to any one of claims 1 to 25 is performed.

29. A computer program product, wherein the computer program product comprises a computer program or instructions; and when the computer program or the instructions are run on a computer, the communication method according to any one of claims 1 to 25 is performed.
